# EUROPÄISCHE PATENTSCHRIFT

(11) **EP 2 030 739 B1**
(45) Veröffentlichungstag und Bekanntmachung des Hinweises auf die Patenterteilung: **05.03.2014**
(21) Anmeldenummer: 08009062.4
(22) Anmeldetag: 16.05.2008
(51) Int. Cl.: B25F 5/00, G01P 1/02

(54) **Elektroeinrichtung für ein handgeführtes Elektrohandwerkzeuggerät**
Electric device for a manually operated electrical hand tool
Dispositif électrique pour un appareil d'outil électrique manuel

(30) Priorität: 29.08.2007 DE 102007041007
(43) Veröffentlichungstag der Anmeldung: 04.03.2009
(73) Patentinhaber: Metabowerke GmbH, 72622 Nürtingen (DE)
(72) Erfinder: Wiesner, Bernd, Dipl.-Ing. (FH), 73277 Owen (DE); Küther, Ludwig, 71111 Waldenbuch (DE); Schmidberger-Brinek, Susanne, Dipl.-Ing., 72587 Römerstein (DE)
(74) Vertreter: Raunecker, Klaus Peter

(56) Entgegenhaltungen:
- EP-A- 0 235 735
- EP-A- 1 003 040
- DE-A1- 4 137 385
- DE-A1- 4 422 739
- DE-A1- 10 116 019
- DE-A1- 19 650 446
- US-A- 3 098 950

## Beschreibung

Die Erfindung betrifft eine Elektronikeinrichtung für ein handgeführtes Elektrohandwerkzeuggerät umfassend eine in einer ersten Aufnahme angeordnete Elektronikeinheit sowie einen in einer zweiten Aufnahme angeordneten, der Elektronikeinheit zugeordneten und mit der Elektronikeinheit verbindbaren Drehzahlaufnehmer, wobei die beiden Aufnahmen miteinander koppelbar sind.

Derartige Elektrohandwerkzeuggeräte können Bohrmaschinen, Schlagbohrmaschinen, Bohrhämmer, aber auch Schneid- und Schleifgeräte sowie Schrauber sein. Bei derartigen Elektrohandwerkzeuggeräten ist es vorteilhaft und bekannt, eine elektronische Drehzahlregelung für den Antriebsmotor vorzusehen, wobei der Drehzahlaufnehmer oder Tachogenerator einerseits unmittelbar an die meist separate, blockartig vergossene Elektronikeinheit angebaut ist, da hiermit der Vorteil kurzer und weniger störanfälliger Verbindungen verbunden ist.

Darüber hinaus steht der Drehzahlaufnehmer mit dem Antriebsmotor in Kontakt, um die Drehzahl des Antriebsmotors über ein rotierendes Teil des Antriebsmotors zu erfassen. Generell lassen sich eine Vielzahl von verschiedenen Tachoprinzipien realisieren.

So ist es beispielsweise aus DE 41 37 385 A1 bekannt, eine Drehzahlregeleinrichtung für ein handgehaltenes Elektrohandwerkzeuggerät bereitzustellen, die als separate blockartige Baugruppe in einen Einbauraum im Verbindungsbereich des Handgriffs mit dem Antriebsgehäuse des Elektrohandwerkzeugs eingesetzt ist und einen zugeordneten Drehzahlaufnehmer aufweist, der die Drehzahl eines im Antriebsgehäuse eingebauten Elektromotors erfasst.

Dabei beschreibt die DE 41 37 385 A1 eine Schiebeführung zwischen den beiden Aufnahmen, um so eine Anpassung der Verbindung der Aufnahme des Drehzahlaufnehmers und der Elektronikeinheit bereitzustellen.
Nachteilig bei der bekannten Ausgestaltung ist, dass der Drehzahlaufnehmer nach dessen Montage in der Aufnahme und Verbindung mit der Elektronikeinheit vergossen wird, vor dem Vergießen in der Aufnahme verschieblich ist, so dass eine exakte Positionierung des Drehzahlaufnehmers vor dem Vergießen desselben nur mit erhöhtem Mehraufwand erreicht werden kann.

Die Erfindung löst diese Aufgabe durch eine Elektronikeinheit der gattungsgemäßen Art, bei der die zweite Aufnahme einen hieran angelenkten Deckel umfasst, der in einer geschlossenen Position, in der er die Aufnahme verschließt, zur Festlegung des Drehzahlaufnehmers dient.

Der Deckel kann hierbei von einer offenen Position, in der er nicht über der Aufnahme zu liegen kommt, in eine geschlossene Position, in der er die einseitig offene Aufnahme verschließt, verschwenkt werden. Die geschlossene Position kann hier über verschiedene Maßnahmen festgelegt sein. Insbesondere ist es möglich, den Deckel mit der Aufnahme zu verrasten oder reibschlüssig festzulegen. Generell sind jedoch auch andere Arretierungen des Deckels in der geschlossenen Position denkbar. Besonders bevorzugt kann dabei zur Verrastung vorgesehen sein, dass an der dem Deckel gegenüberliegenden Fläche der Aufnahme (Aufnahmeboden) ein Dorn vorgesehen ist, wobei es sich insbesondere um einen quadratischen Dorn handeln kann, der eine runde Öffnung im Deckel durchgreift und es zu einem Verklemmen des quadratischen Dorns in der Öffnung kommt. Alternativ können jedoch auch rastende Arretierungen, wie beispielsweise Rasthaken etc., vorgesehen sein. Es kann dabei vorgesehen sein, dass durch die Verrastung oder reibschlüssige Festlegung der Deckel mit einer gewissen Kraft gegen den in die Aufnahme eingebrachten Drehzahlaufnehmer angedrückt wird und den Drehzahlaufnehmer so kraftschlüssig festlegt.

Dabei kann vorgesehen sein, dass der Deckel eine gewisse Flexibilität aufweist, also elastisch verformbar ist. Durch diese Federeigenschaft des flexiblen Deckels wirkt eine Vorspannung auf den Drehzahlaufnehmer. Durch diese Vorspannung wird der Drehzahlaufnehmer durch den Deckel in Richtung der dem Deckel gegenüberliegenden Fläche, also dem Boden der Aufnahme gedrückt und so fixiert.

Es kann des Weiteren vorgesehen sein, dass in der dem Deckel gegenüberliegenden Fläche, also dem Boden der Aufnahme eine oder mehrere Aussparungen vorgesehen sind, insbesondere in Form einer Einsenkung, in die der Drehzahlaufnehmer bezüglich der Richtungen der Fläche festlegbar aufnehmbar ist. Das heißt, nach Einlegen des Drehzahlaufnehmers in die Aussparung ist dieser hinsichtlich der beiden parallel zur Fläche verlaufenden Richtungen nicht länger verschieblich, sondern bezüglich seiner Position in der Aufnahme fixiert. Durch Verschwenken des Deckels und dessen Andrücken gegen den Drehzahlaufnehmer wird auch die Richtung senkrecht zur Fläche hinsichtlich einer Bewegung des Drehzahlaufnehmers blockiert.

Der Drehzahlaufnehmer ist dann in allen drei Richtungen in der Aufnahme festgelegt und es kann dann ein Einfüllen der Vergussmasse in die Aufnahme des Drehzahlaufnehmers erfolgen, ohne dass es durch den Druck der einfließenden Vergussmasse zu einem Verschieben des Drehzahlaufnehmers sowohl hinsichtlich der Flächenrichtungen als auch hinsichtlich der Richtung senkrecht hierzu kommen kann, zum Beispiel weil Gussmasse unter den Drehzahlaufnehmer gelangt.

Es kann dabei besonders bevorzugt vorgesehen sein, dass die erste und die zweite Aufnahme, nämlich die Aufnahme der Elektronikeinheit und die Aufnahme des Drehzahlgebers, einstückig miteinander verbunden sind.

Die Aufnahmen können hierbei als Spritzgussteile ausgebildet sein. Dies bietet den besonderen Vorteil einer besonders einfachen Herstellbarkeit in einem einzigen Bearbeitungsschritt, wobei gleichzeitig auch die Rastelemente angeformt werden können. Darüber hinaus kann vorgesehen sein, dass auch der Deckel einstückig mit der Aufnahme für den Drehzahlaufnehmer verbunden ist und insbesondere über ein Filmscharnier an der zweiten Aufnahme angelenkt ist. In diesem Fall können die beiden Aufnahmen, die im allgemeinen Sprachgebrauch auch als Elektronik- oder Kunststoffbecher bezeichnet werden und jeweils fünf Seitenwände aufweisen, nämlich einen Boden sowie vier Seitenwände, und der Deckel für die zweite Aufnahme als einheitliches Kunststoffspritzgussteil hergestellt werden. Darüber hinaus können auch die Verrastungselemente bereits vorgesehen sein und insbesondere kann in den Deckel eine weitere Öffnung zur Einfüllung der Vergussmasse ebenfalls unmittelbar beim Herstellungsprozess eingebracht werden. Eine derartige Ausgestaltung hat dabei den Vorteil, dass die Herstellung als Spritzgussformteil möglich ist, ohne Schieber für den Werkzeugaufbau zu benötigen, die dann später ein Entformen möglich machen würden.

Darüber hinaus bietet die Gestaltung den Vorteil durch die allseitige Fixierung des Drehzahlaufnehmers beim Einspritzen der Vergussmasse, den Drehzahlaufnehmer keinem mechanischen Stress auszusetzen. Des Weiteren wird die Anzahl der Bauteile verringert.

Der Drehzahlaufnehmer kann dabei über flexible Kabel, so genannte Litzen, mit der Elektronikeinheit verbindbar sein. Die Elektronikeinrichtung kann durch die vorstehend beschriebene Gestaltung bereits vorkonfektioniert werden bis zu dem Stadium, an dem die Elektronikeinheit mit dem Drehzahlaufnehmer verbunden ist und sowohl die Elektronikeinheit als auch der Drehzahlaufnehmer in ihren jeweiligen Aufnahmen vergossen sind. Durch die einstückige Miteinanderverbundenheit der beiden Aufnahmen ist dann eine leichte Handhabbarkeit und Lagerhaltung der gesamten Elektronikeinrichtung möglich.

Schließlich betrifft die Erfindung noch ein Elektrohandwerkzeuggerät wie insbesondere eine Bohrmaschine, Schlagbohrmaschine, Bohrhammer oder Schrauber, aber auch Schneid- und Schleifgeräte.

Weitere Vorteile und Merkmale der Erfindung ergeben sich aus den übrigen Anmeldungsunterlagen.

Die Erfindung wird im Folgenden anhand einer Zeichnung näher erläutert.

Dabei zeigen:
- Figur 1: eine Darstellung der Aufnahmen für die Elektronikeinheit und den Drehzahlaufnehmer;
- Figur 2: die Aufnahmen gemäß Figur 1 mit der darin aufgenommenen Elektronikeinheit beziehungsweise dem Drehzahlaufnehmer.

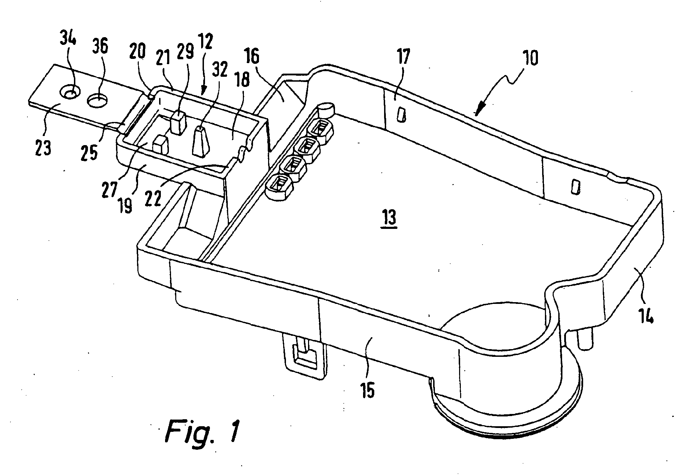

Figur 1 zeigt zwei Aufnahmen zur Anordnung einer Elektronikeinheit, nämlich eine erste Aufnahme 10 sowie eine zweite Aufnahme 12. Die erste Aufnahme 10 dient dabei der Aufnahme einer Elektronikeinheit, unter anderem beispielsweise einer Drehzahlregeleinrichtung. Die Elektronikeinheit wird dabei in die Aufnahme 10 eingebracht, die einen Boden 13 sowie vier Seitenwände 14, 15 und 16 sowie 17 aufweist, die allseitig an den Boden anschließen und sich von diesem senkrecht nach oben erstrecken und dort festgelegt. Eine derartige Aufnahme wird daher auch als Elektronikbecher bezeichnet.

Des Weiteren ist eine zweite Aufnahme 12 vorgesehen, die der Aufnahme eines Drehzahlaufnehmers oder Tachogenerators dient. Die zweite Aufnahme weist ebenfalls einen Boden 18 auf, an den sich allseitig und senkrecht hierzu Seitenwände 19, 20, 21 und 22 erstrecken.

Darüber hinaus weist die zweite Aufnahme einen Deckel 23 auf, der die sechste Seite der zweiten Aufnahme 12 bildet. Der Deckel 23 ist hierbei über ein Filmscharnier 25 mit der Seitenwand 20 der Aufnahme 12 verbunden.

Die beiden Aufnahmen 12 und 10 sind einstückig miteinander verbunden und sind als Spritzgussteile ausgebildet. Dabei können die Aufnahmen 10 und 12 so ausgebildet sein, dass das Spritzgusswerkzeug lediglich aus zwei Werkzeughälften gebildet sein kann, ohne zusätzliche Schieber einsetzen zu müssen, die eine Entformbarkeit der miteinander verbundenen Aufnahmen ermöglichen.

Im Boden 18 der Aufnahme 12 ist eine Aussparung 27 oder Einsenkung angebracht, in die ein Tachogenerator einlegbar ist, so dass der Tachogenerator in der Ebene des Bodens 18 gegen Verschiebungen gesichert ist. Zusätzlich können hierzu auch zwei einstückig mit dem Boden 18 der Aufnahme 12 verbundene quadratische Dorne 29 vorgesehen sein, die sich vom Boden 18 in Richtung der gegenüberliegenden Fläche (vom Deckel 23 zu verschließende Öffnung der Aufnahme 12) erstrecken und so ein Verkippen des Drehzahlaufnehmers (nicht dargestellt) verhindern. Weiterhin ist am Boden der Aufnahme 12 ein quadratischer, sich nach oben verjüngender Dorn 32 vorgesehen, der beim Verschließen des Deckels 23 eine Öffnung 34 im Deckel 23 durchstößt, wobei aufgrund des gewählten Durchmessers der Öffnung 34 es zu einem Verklemmen des quadratischen Dorns 32 in der Öffnung 34 kommt.

Das Verklemmen wird dadurch erleichtert, dass eine gewisse Verformbarkeit der Kunststoffbauteile gegeben ist, so dass der Deckel 23 über einen gewissen Punkt hinweg in Schließrichtung auf den Boden 18 zu verschoben werden kann, an dem bereits eine erste Verklemmung mit dem Dorn 32 eintritt. Dadurch kann der Deckel 23 verschlossen werden, bis der Deckel 23 mit einer gewissen Kraft gegen den Drehzahlaufnehmer anliegt. Um dies zu erleichtern, ist der Deckel ausgehend von der der Aufnahme 12 zugewandten Seite in der geschlossenen Position im Bereich der Öffnung 34 eingesenkt, so dass die Verschlussbewegung erleichtert wird.

Darüber hinaus weist der Deckel 32 eine weitere Öffnung 36 auf, die bei einem anschließenden Vergießprozess der in der Aufnahme 12 enthaltenen Komponenten als Einfüllöffnung für die Gussmasse dient.

In die Aufnahmen 10 und 12 werden dann die jeweiligen Bauteile, nämlich die Elektronikeinheit sowie der Drehzahlaufnehmer eingefügt und die beiden Aufnahmen werden dann zum einen über die Öffnung 36 und zum anderen durch die offene Seite der Aufnahme 10 mit Gussmasse verfüllt und so die Elektronikbauteile in den Aufnahmen 10 und 12 festgelegt, so dass diese gegen Schwingungen und andere Belastungen gesichert sind. Der Drehzahlaufnehmer in der Aufnahme 12 kann dabei mit der Elektronikeinheit in der Aufnahme 10 über Litzen verbunden sein.

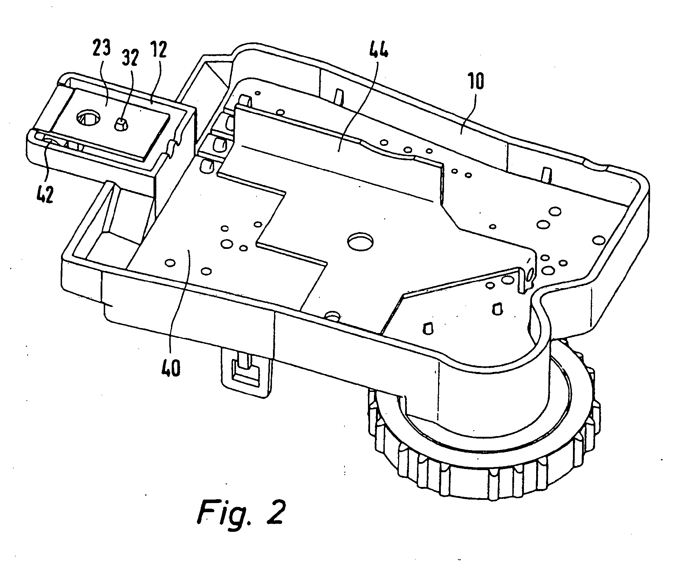

In Figur 2 sind nun die Elektronikbauteile, nämlich der Drehzahlaufnehmer 42 und die Bauteile der Elektronikeinheit 44 in die Aufnahmen 10 und 12 eingebracht. Der Deckel 23 der Aufnahme 12 ist verschlossen. Dabei dienen die Dorne 29 neben der Fixierung des Drehzahlaufnehmers 42 auch der Auflage des Deckels 23, der sich gegen die in Richtung auf den Deckel weisenden Flächen der Dorne 29 abstützt. Der Dorn 32 mit quadratischem Querschnitt hat in der Darstellung nun die Öffnung 34 durchgriffen und sich in dieser verklemmt, wobei der Deckel gegen den Drehzahlaufnehmer 42 drückt. Als nächster Schritt kann nun die Vergussmasse in die Aufnahmen 10 und 12 eingefüllt werden. Die Elektronikeinheit ist dann fertig konfektioniert und kann bis zum Einsatz als Einheit gelagert werden, wodurch auch eine einfache Handhabbarkeit gegeben ist.

Durch die erfindungsgemäße Ausgestaltung kann der Drehzahlaufnehmer besonders einfach in der Aufnahme 12 exakt und reproduzierbar positioniert werden. Separate Bauteile zur Fixierung des Drehzahlaufnehmers 42 werden vermieden, für die eine gesonderte Herstellung oder Lagerhaltung notwendig wäre. Sämtliche erforderlichen Bauteile können in einem einzigen Herstellungsprozess einstückig miteinander verbunden erzeugt werden.

Das Handling beim Konfektionieren ist dabei besonders einfach, indem der Deckel 23 um das Filmscharnier herum verschwenkt wird und in eine verschlossene Position gebracht wird, wobei zugleich eine Fixierung des Drehzahlaufnehmers erfolgen kann, da der Deckel 23 sich so weit in Richtung auf die Aufnahme 12 verschwenken lässt, dass der Deckel 23 mit einem gewissen Druck gegen den Drehzahlaufnehmer 42 anliegt und diesen in die Aussparung 27 der Aufnahme 12 drückt. Hierzu kann vorgesehen sein, dass der Deckel 23 eine gewisse elastische Verformbarkeit besitzt und so federnd unter Vorspannung gegen den Drehzahlaufnehmer 42 anliegt. Darüber hinaus ist hierdurch ein gewisser Toleranzausgleich möglich. Schließlich besteht der Vorteil, dass aufgrund der Festlegung des Drehzahlaufnehmers 42 in der Aufnahme 12 vor dem Vergießen kein mechanischer Stress bei dem Vergussprozess auf den Drehzahlaufnehmer 42 ausgeübt wird.

## Patentansprüche

1. Elektronikeinrichtung für ein handgeführtes Elektrohandwerkzeuggerät umfassend eine in einer ersten Aufnahme (10) angeordnete Elektronikeinheit (44) sowie einen in einer zweiten Aufnahme (12) angeordneten der Elektronikeinheit (44) zugeordneten und mit der Elektronikeinheit (44) verbindbaren Drehzahlaufnehmer (42), wobei die beiden Aufnahmen (10, 12) miteinander koppelbar sind, **dadurch gekennzeichnet, dass** die zweite Aufnahme (12) einen hieran angelenkten Deckel (23) umfasst, der in der geschlossenen Position in der er die Aufnahme (12) verschließt zur Festlegen des Drehzahlaufnehmers (42) dient.

2. Elektronikeinrichtung nach Anspruch 1, **dadurch gekennzeichnet, dass** der Deckel (23) an der Aufnahme (12) in der geschlossenen Position festlegbar, insbesondere in der geschlossenen Position verklemmbar oder verrastbar ist.

3. Elektronikeinrichtung nach Anspruch 1 oder 2, **dadurch gekennzeichnet, dass** an der dem Deckel (23) gegenüberliegenden Fläche (18) der Aufnahme (12) ein Dorn (32) vorgesehen ist, der eine korrespondierende Öffnung (34) im Deckel (23) rastend oder reibschlüssig klemmend durchgreift.

4. Elektronikeinrichtung nach einem der Ansprüche 1 bis 3, **dadurch gekennzeichnet, dass** in der dem Deckel (23) gegenüberliegenden Fläche (18) der Aufnahme (12) eine Aussparung (27) vorgesehen ist, in die der Drehzahlaufnehmer (42) bezüglich der Richtungen der Fläche (18) festlegbar aufnehmbar ist und die insbesondere der Kontur und den Abmaßen des Drehzahlaufnehmers (42) angepasst ist.

5. Elektronikeinrichtung nach einem der vorangehenden Ansprüche, **dadurch gekennzeichnet, dass** die Aufnahmen (10, 12) als Spritzgussteile ausgebildet sind.

6. Elektronikeinrichtung nach einem der vorangehenden Ansprüche, **dadurch gekennzeichnet, dass** die Aufnahmen (10, 12) einstückig miteinander verbunden.

7. Elektronikeinrichtung nach einem der vorangehenden Ansprüche, **dadurch gekennzeichnet, dass** der Deckel (23) über ein Filmscharnier (25) einstückig an der zweiten Aufnahme (12) angelenkt ist.

8. Elektronikeinrichtung nach einem der vorangehenden Ansprüche, **dadurch gekennzeichnet, dass** die Elektronikeinheit (44) und der Drehzahlaufnehmer (42) über flexible Kabel miteinander verbindbar sind.

9. Elektronikeinrichtung nach einem der vorangehenden Ansprüche, **dadurch gekennzeichnet, dass** die Elektronikeinheit (44) und der Drehzahlaufnehmer (42) in den Aufnahmen (10, 12) vergießbar sind.

10. Elektronikeinheit nach Anspruch 9, **dadurch gekennzeichnet, dass** der Deckel (23) eine weitere Öffnung (36) zum Einfüllen der Vergussmasse in die zweite Aufnahme (12) bei geschlossenem Deckel (23) aufweist.

11. Elektrohandwerkzeuggerät umfassend eine Elektronikeinheit nach einem der Ansprüche 1 - 10.

## Claims

1. An electronic device for a manually operated electric hand tool device comprising an electronic unit (44) arranged in a first holder (10) and a speed sensor (42), which is arranged in a second holder (12), is associated with the electronic unit (44) and can be connected to the electronic unit (44), wherein the two holders (10, 12) can be coupled to one another, **characterised in that** the second holder (12) comprises a cover (23) which is linked thereto and which, in the closed position in which it closes the holder (12), serves to fix the speed sensor (42) in place.

2. An electronic device according to Claim 1, **characterised in that** the cover (23) can be fixed to the holder (12) in the closed position, in particular clamped or latched in the closed position.

3. An electronic device according to Claim 1 or 2,
**characterised in that**, on that surface (18) of the holder (12) which is opposite the cover (23), a mandrel (32) is provided which reaches through a corresponding opening (34) in the cover (23) in latching manner or clamping with friction fit.

4. An electronic device according to one of Claims 1 to 3, **characterised in that**, **in that** surface (18) of the holder (12) which is opposite the cover (23), a recess (27) is provided in which the speed sensor (42) can be received such that it can be fixed with respect to the directions of the surface (18) and which is adapted in particular to the contour and the dimensions of the speed sensor (42).

5. An electronic device according to one of the preceding claims, **characterised in that** the holders (10, 12) are constructed as injection moulded parts.

6. An electronic device according to one of the preceding claims, **characterised in that** the holders (10, 12) are connected to one another in one piece.

7. An electronic device according to one of the preceding claims, **characterised in that** the cover (23) is linked to the second holder (12) in one piece by way of an integral hinge (25).

8. An electronic device according to one of the preceding claims, **characterised in that** the electronic unit (44) and the speed sensor (42) can be connected to one another by way of flexible cables.

9. An electronic device according to one of the preceding claims, **characterised in that** the electronic unit (44) and the speed sensor (42) can be cast in the holders (10, 12).

10. An electronic unit according to Claim 9, **characterised in that** the cover (23) has a further opening (36) for pouring the casting mass into the second holder (12) when the cover (23) is closed.

11. An electric hand tool device comprising an electronic unit according to one of Claims 1 - 10.

## Revendications

1. Installation électronique pour un appareil d'outillage électroportatif comprenant une unité électronique (44) montée dans une première enceinte (10) ainsi qu'un compteur de tours (42) associé à l'unité électronique (44) et connecté à l'unité électronique (44), monté dans une seconde enceinte (12), dans laquelle les deux enceintes (10, 12) peuvent être couplées entre elles, **caractérisée en ce que** la seconde enceinte (12) comporte un couvercle (23) articulé qui, dans la position fermée obture l'enceinte (12) en vue de fixer en position le compteur de tours (42).

2. Installation électronique selon la revendication 1, **caractérisée en ce que** le couvercle (23) est agencé pour être fixé à l'enceinte (12) dans la position fermée, en particulier, il peut être fermé par pincement ou par encliquetage.

3. Installation électronique selon la revendication 1 ou 2, **caractérisée en ce que** la surface (18) située à l'opposé du couvercle (23) de l'enceinte (12) comporte une pointe (32) qui s'engage dans une ouverture correspondante (34) ménagée dans le couvercle (23) pour un verrouillage par encliquetage ou par friction.

4. Installation électronique selon l'une des revendications 1 à 3, **caractérisée en ce que** la surface (18) située à l'opposé du couvercle (23) de l'enceinte (12) comporte un évidement (27) dans lequel le compteur de tours (42) peut être fixé par emboîtement, en raison des orientations de la surface (18), et en particulier du contour et du dimensionnement adapté du compteur de tours (42).

5. Installation électronique selon l'une des revendications précédentes, **caractérisée en ce que** les enceintes (10, 12) sont réalisées sous forme de pièces en fonte injectée.

6. Installation électronique selon l'une des revendications précédentes, **caractérisée en ce que** les enceintes (10, 12) sont réalisées d'une pièce, reliées entre elles.

7. Installation électronique selon l'une des revendications précédentes, **caractérisée en ce que** le couvercle (23) est réalisé d'une pièce avec la seconde enceinte (12) et relié avec elle par une charnière (25) sous forme d'un film.

8. Installation électronique selon l'une des revendications précédentes, **caractérisée en ce que** l'unité électronique (44) et le compteur de tours (42) sont interconnectés au moyen de câbles flexibles,

9. Installation électronique selon l'une des revendications précédentes, **caractérisée en ce que** l'unité électronique (44) et le compteur de tours (42) peuvent être surmoulés dans les enceintes (10, 12).

10. Installation électronique selon la revendication 9, **caractérisée en ce que** le couvercle (23) comporte une autre ouverture (36) pour le remplissage avec la matière de surmoulage de la seconde enceinte (12), le couvercle étant fermé.

11. Appareil électrique portable comportant une unité électronique selon l'une des revendications 1 - 10.
